(19) Europäisches Patentamt
European Patent Office
Office européen des brevets

(11)  **EP 2 297 372 B1**

(12)  **FASCICULE DE BREVET EUROPEEN**

(45) Date de publication et mention
de la délivrance du brevet:
**28.03.2012  Bulletin 2012/13**

(51) Int Cl.:
***C23C 2/06*** *(2006.01)*       ***C23C 2/26*** *(2006.01)*

(21) Numéro de dépôt: **09757685.4**

(22) Date de dépôt: **14.05.2009**

(86) Numéro de dépôt international:
**PCT/FR2009/000560**

(87) Numéro de publication internationale:
**WO 2009/147309 (10.12.2009 Gazette 2009/50)**

(54)  **PROCEDE DE FABRICATION D'UNE BANDE METALLIQUE REVETUE PRESENTANT UN ASPECT AMELIORE**

VERFAHREN ZUR HERSTELLUNG EINES BESCHICHTETEN METALLBANDS MIT VERBESSERTEM AUSSEHEN

METHOD FOR PRODUCING A COATED METAL STRIP HAVING AN IMPROVED APPEARANCE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **14.05.2008  EP 08290450**

(43) Date de publication de la demande:
**23.03.2011  Bulletin 2011/12**

(73) Titulaire: **Arcelormittal Investigación y Desarrollo SL**
**48910 Sestao, Bizkaia (ES)**

(72) Inventeurs:
• **DIEZ, Luc**
**F-57000 Metz (FR)**

• **MATAIGNE, Jean-Michel**
**F-60300 Senlis (FR)**

(74) Mandataire: **Plaisant, Sophie Marie**
**ArcelorMittal France**
**ArcelorMittal R&D**
**Intellectual Property**
**1-5 rue Luigi Cherubini**
**93200 Saint-Denis (FR)**

(56) Documents cités:
**EP-A- 1 466 994        EP-A- 1 489 195**
**BE-A6- 1 003 440       JP-A- 6 158 257**
**US-A1- 2003 219 621**

**Description**

L'invention concerne un procédé de fabrication d'une bande métallique présentant un aspect amélioré, plus particulièrement destinée à être utilisée pour la fabrication de pièces de peau pour véhicules terrestres à moteur, sans toutefois y être limitée.

Les tôles en acier destinées à la fabrication de pièces pour véhicule terrestre à moteur sont généralement revêtues d'une couche métallique de protection contre la corrosion, à base de zinc, déposée soit par trempé à chaud dans un bain liquide à base de zinc, soit par électrodéposition dans un bain électrolytique comprenant des ions du zinc. Un procédé de revêtement par trempé à chaud est décrit par le document EP1466994.

Les tôles galvanisées destinées à la fabrication de pièces de peau, sont ensuite mises en forme et assemblées pour former une caisse en blanc, qui est ensuite revêtue par au moins une couche de peinture, laquelle assure une protection accrue contre la corrosion ainsi qu'un bon aspect de surface.

A cet effet, conventionnellement, les constructeurs automobiles appliquent d'abord sur la caisse en blanc une couche de cataphorèse, puis une couche de peinture d'apprêt, une couche de peinture de base, et éventuellement une couche de vernis. Pour obtenir un aspect de surface peint satisfaisant, il est généralement appliqué une épaisseur totale de peinture comprise entre 90 et 120 $\mu$m, constituée d'une couche de cataphorèse de 20 à 30 $\mu$m d'épaisseur, d'une couche de peinture d'apprêt de 40 à 50 $\mu$m, et une couche de peinture de base de 30 à 40 $\mu$m, par exemple.

Afin de limiter l'épaisseur des systèmes de peinture à une valeur inférieure à 90 $\mu$m, certains constructeurs automobiles ont proposé soit d'éviter l'étape de cataphorèse, soit encore de limiter le nombre de couches de peinture pour augmenter la productivité. Cependant, à ce jour, cette réduction d'épaisseur du système peinture s'effectue toujours au détriment de l'aspect de surface peint final de la pièce et n'est pas mise en oeuvre industriellement.

En effet, les revêtements à base de zinc servant de substrat de base présentent ce qu'on appelle une ondulation de leur surface, qui ne peut actuellement être compensée que par des couches importantes de peinture sous peine d'avoir un aspect dit de « peau d'orange » inacceptable pour des pièces de carrosserie.

L'ondulation W (waviness en anglais) de la surface est une irrégularité géométrique douce, pseudopériodique, d'assez grande longueur d'onde (0,8 à 10 mm) que l'on distingue de la rugosité R qui correspond aux irrégularités géométriques de faibles longueurs d'ondes (< 0,8mm).

Dans la présente invention, la moyenne arithmétique Wa du profil d'ondulation, exprimée en $\mu$m, a été retenue pour caractériser l'ondulation de la surface de la tôle, et les mesures d'ondulation ont été réalisées avec un seuil de coupure de 0,8 mm et désignées par $Wa_{0,8}$.

Le but de l'invention est donc de mettre à disposition un procédé de fabrication d'une bande métallique revêtue d'un revêtement anticorrosion, dont l'ondulation $Wa_{0,8}$ soit réduite par rapport aux bandes de l'art antérieur, permettant ainsi de fabriquer des pièces métalliques peintes nécessitant une épaisseur totale de peinture réduite par rapport aux pièces de l'art antérieur.

A cet effet, un premier objet de l'invention est constitué par un procédé de fabrication d'une bande métallique présentant un revêtement métallique de protection contre la corrosion, comprenant les étapes consistant à :

- faire passer la bande métallique dans un bain de métal en fusion comprenant entre 2% en poids et 8% en poids d'aluminium, de 0 à 5% en poids de magnésium et jusqu'à 0,3% en poids d'éléments d'addition, le complément étant du zinc et des impuretés inévitables, ledit bain étant maintenu à une température comprise entre 350 et 700°C puis
- essorer la bande métallique revêtue au moyen de buses projetant un gaz de part et d'autre de la bande, puis
- refroidir le revêtement de façon contrôlée jusqu'à sa solidification complète, ledit refroidissement étant effectué à une vitesse inférieure à 15°C/s entre la température en sortie d'essorage et le début de la solidification, puis à une vitesse supérieure ou égale à 15°C/s entre le début et la fin de sa solidification.

Dans des modes de réalisations préférés, le procédé selon l'invention peut en outre comprendre les caractéristiques suivantes, prises seules ou en combinaison :

- le refroidissement est effectué à une vitesse inférieure à 10°C/s entre la température en sortie d'essorage et le début de la solidification, puis à une vitesse supérieure ou égale à 15°C/s entre le début et la fin de sa solidification,
- le refroidissement est effectué à une vitesse inférieure à 10°C/s entre la température en sortie d'essorage et le début de la solidification, puis à une vitesse supérieure ou égale à 20°C/s entre le début et la fin de sa solidification,
- on essore la bande métallique revêtue de telle sorte que la partie de la bande située entre la ligne d'essorage et finissant au moins 10 cm plus haut soit en contact avec une atmosphère dont le pouvoir oxydant est inférieur à celui d'une atmosphère constituée de 4% en volume d'oxygène et 96% en volume d'azote,
- la bande métallique est une bande d'acier.

L'invention a également pour objet une bande métallique laminée à froid et revêtue par trempé à chaud mais non skin-passée, pouvant être obtenue par le procédé selon l'invention, dont le revêtement métallique comprend de 2 à 8% en poids d'aluminium, de 0 à 5% en poids de magnésium, jusqu'à 0,3% en poids d'éléments additionnels, le complément étant constitué de zinc et d'impuretés inévitables, ledit revêtement présentant une ondulation $Wa_{0,8}$ inférieure ou égale à 0,5 $\mu$m, de préférence inférieure ou égale à 0,45 $\mu$m.

Dans des modes de réalisations préférés, la bande métallique selon l'invention peut en outre comprendre les caractéristiques suivantes, prises seules ou en combinaison :

- le revêtement métallique ne contient pas de magnésium,
- le revêtement métallique contient de 1 à 4% en poids de magnésium,
- la bande métallique est constituée d'acier.

L'invention a également pour objet une pièce métallique obtenue par déformation d'une bande métallique non skin-passée, dont le revêtement présente une ondulation $Wa_{0,8}$ inférieure ou égale à 0,48 $\mu$m, de préférence inférieure ou égale à 0,43.

L'invention a en outre pour objet une pièce métallique obtenue par déformation d'une bande métallique ayant subi une opération de skin-pass avant déformation, dont le revêtement présente une ondulation $Wa_{0,8}$ inférieure ou égale à 0,35 $\mu$m, de préférence inférieure ou égale à 0,32, voire 0,31 $\mu$m.

Les caractéristiques et avantages de la présente invention apparaîtront mieux au cours de la description qui va suivre, donnée à titre d'exemple non limitatif.

La première étape du procédé selon l'invention consiste à faire passer en continu une bande métallique, telle qu'une bande d'acier, dans un bain de revêtement contenant du métal en fusion, contenu dans un creuset.

La vitesse de défilement de la bande sur les lignes industrielles est en général comprise entre 40m/min et 200m/min, par exemple, et est de préférence supérieure à 120m/min, voire supérieure à 150m/min.

La composition du bain de revêtement à utiliser dans le procédé selon l'invention est à base de zinc et contient de 2% à 8% en poids d'aluminium, qui est donc un élément indispensable du revêtement. Les inventeurs ont constaté qu'un revêtement comprenant moins de 2% en poids d'aluminium ne permettait pas d'obtenir d'amélioration de l'ondulation par le procédé selon l'invention. De même, un revêtement comprenant plus de 8% en poids d'aluminium ne permet pas non plus d'obtenir cet effet recherché pour l'invention. Cet élément permet également d'améliorer la résistance à la corrosion.

Le bain peut également contenir jusqu'à 5% en poids de magnésium afin d'améliorer la résistance à la corrosion du revêtement galvanisé et en particulier sa résistance contre la rouille rouge. Pour obtenir un effet notable sur la résistance à la corrosion, on préfère en ajouter au moins 0,1% en poids, voire 0,2% en poidset de préférence au moins 1% en poids. On limite sa teneur dans le bain à 5%, voire 4% en poids car le revêtement obtenu pourrait présenter des problèmes de fragilité et d'adhérence lors de la mise en forme ultérieure, pour des teneurs supérieures. En outre, les inventeurs ont constaté que l'ajout de cet élément ne remettait pas en cause les résultats obtenus sur l'ondulation par l'ajout d'aluminium.

La composition du bain peut également contenir jusqu'à 0,3% en poids d'éléments optionnels d'addition tels que Si, Sb, Pb, Ti, Ca, Mn, Sn, La, Ce, Cr, Ni, Zr ou Bi. Ces différents éléments peuvent permettre, entre autres, d'améliorer la résistance à la corrosion du revêtement ou bien sa fragilité ou son adhésion, par exemple. L'homme du métier qui connaît leurs effets sur les caractéristiques du revêtement saura les employer en fonction du but complémentaire recherché. On a également vérifié que ces éléments n'interféraient pas avec la maîtrise de l'ondulation obtenue par le procédé selon l'invention. Dans certaines circonstances, on préfèrera cependant limiter la teneur en titane à moins de 0,01%, voire moins de 0,005% car cet élément peut générer des problèmes de pollution des bains de dégraissage et de phosphatation des constructeurs automobiles.

Enfin le bain peut contenir des impuretés inévitables provenant des lingots d'alimentation du creuset ou bien encore du passage de la bande dans le bain. On pourra ainsi citer notamment, le fer, etc..,

Le bain est maintenu à une température comprise entre celle du liquidus +10°C et 700°C, la température du liquidus variant en fonction de sa composition. Pour la gamme de revêtements utilisés dans la présente invention, cette température sera donc comprise entre 350 et 700°C. On rappellera que le liquidus est la température au-delà de laquelle un alliage est à l'état entièrement fondu, le solidus étant la température en-dessous de laquelle un alliage est à l'état entièrement solidifié. Pour certaines compositions, la température du liquidus pourra être égale à celle du solidus.

Après passage dans le creuset, la bande métallique revêtue sur ses deux faces est ensuite soumise à un essorage au moyen de buses placées de part et d'autre de la bande qui projettent un gaz, tel que de l'air ou un gaz inerte, vers la surface de la bande. Cette opération classique, bien connue de l'homme du métier, permet de régler l'épaisseur du revêtement de façon précise, alors qu'il n'est pas encore solidifié.

A l'issue de l'essorage, l'étape essentielle du procédé selon l'invention est le refroidissement contrôlé du revêtement jusqu'à sa solidification complète.

En effet, les présents inventeurs ont constaté qu'il était nécessaire de refroidir le revêtement de façon différentié avant le début de la solidification et dès le début de celle-ci.

Ainsi, le refroidissement doit être effectué à une vitesse inférieure à 15°C/s, de préférence inférieure à 10°C/s, et de façon plus particulièrement préférée inférieure ou égale à 5°C/s, entre la température en sortie d'essorage et le début de la solidification (c'est à dire lorsque le revêtement tombe juste sous la température du liquidus), puis à une vitesse supérieure ou égale à 15°C/s, de préférence supérieure à 20°C/s, entre le début et la fin de sa solidification (c'est à dire lorsque le revêtement atteint la température du solidus).

En respectant ces consignes, on observe en effet une amélioration surprenante et significative de l'ondulation des revêtements en question, comme le montrent les essais présentés plus loin.

Le refroidissement jusqu'au début de la solidification pourra être obtenu par convection naturelle si l'on souhaite refroidir à une vitesse ne dépassant pas environ 5°C/s. Au-delà, il sera généralement nécessaire de procéder à un refroidissement forcé par tout moyen technique adapté, tel qu'un soufflage de gaz froid, par exemple.

De la même façon, le refroidissement à partir du début de solidification se fera normalement par refroidissement forcé.

Lorsque la tôle revêtue est complètement refroidie, elle peut subir une opération de skin-pass qui permet de lui conférer une texture facilitant sa mise en forme ultérieure. En effet, l'opération du skin-pass permet de transférer à la surface de la tôle une rugosité suffisante pour que sa mise en forme s'effectue dans de bonnes conditions, en favorisant une bonne rétention de l'huile appliquée sur la tôle avant sa mise en forme.

Cette opération de skin-pass est généralement réalisée pour les tôles métalliques destinées à la fabrication de pièces de carrosserie pour véhicules terrestres à moteur. Lorsque les tôles métalliques selon l'invention sont destinées à la fabrication d'appareils électroménagers, par exemple, on ne procède pas à cette opération supplémentaire.

La tôle skin-passée ou non est ensuite mise en forme, par exemple par emboutissage, pliage ou profilage, et de préférence par emboutissage, pour former une pièce que l'on peut ensuite mettre en peinture. Dans le cas des pièces pour l'électroménager, on peut aussi soumettre éventuellement cette couche de peinture à un recuit par des moyens physiques et/ou chimiques, connus en eux-mêmes. A cet effet, on peut faire passer la pièce peinte au travers d'un four à air chaud ou à induction, ou encore sous des lampes UV ou sous un dispositif diffusant des faisceaux d'électrons.

Pour la production de pièces pour l'automobile, on la trempe dans un bain de cataphorèse, et on applique successivement, une couche de peinture d'apprêt, une couche de peinture de base, et éventuellement une couche de vernis de finition.

Avant d'appliquer la couche de cataphorèse sur la pièce, celle-ci est préalablement dégraissée puis phosphatée de manière à assurer l'adhérence de la cataphorèse. La couche de cataphorèse assure à la pièce une protection complémentaire contre la corrosion. La couche de peinture d'apprêt, généralement appliquée au pistolet, prépare l'apparence finale de la pièce et la protège contre le gravillonnage et contre les UV. La couche de peinture de base confère à la pièce sa couleur et son apparence finale. La couche de vernis confère à la surface de la pièce une bonne résistance mécanique, une résistance contre les agents chimiques agressifs et un bon aspect de surface.

La couche de peinture (ou système peinture) mise en oeuvre pour protéger et garantir un aspect de surface optimal aux pièces galvanisées, présente par exemple une couche de cataphorèse de 10 à 20 $\mu$m d'épaisseur, une couche de peinture d'apprêt inférieure à 30 $\mu$m, et une couche de peinture de base inférieure à 40 $\mu$m.

Dans les cas, où le système peinture comprend en outre une couche de vernis, les épaisseurs des différentes couches de peinture sont généralement les suivantes :

- couche de cataphorèse : inférieure à 10 à 20 $\mu$m,
- couche de peinture d'apprêt : inférieure à 20 $\mu$m,
- couche de peinture de base : inférieure à 20 $\mu$m et avantageusement inférieure à 10 $\mu$m, et
- couche de vernis : de préférence inférieure à inférieure à 30 $\mu$m.

Le système peinture pourra également ne pas comprendre de couche de cataphorèse, et ne comprendre qu'une couche de peinture d'apprêt et une couche de peinture de base et éventuellement une couche de vernis.

Par ailleurs, des investigations complémentaires ont permis d'améliorer encore le niveau d'ondulation des tôles et pièces selon l'invention, en prenant des mesures particulières dans la zone d'essorage du revêtement.

Les présents inventeurs ont en effet constaté qu'en faisant en sorte que l'atmosphère de cette zone présente un pouvoir oxydant inférieur à celui d'une atmosphère constituée de 4% en volume d'oxygène et de 96% en volume d'azote, on réduisait encore le niveau d'ondulation des tôles ayant subi un refroidissement selon l'invention.

La zone devant être maintenue à un faible niveau d'oxydation est au minimum celle commençant immédiatement au-dessus de la ligne d'essorage et s'arrêtant au moins 10 cm plus haut et entourant la bande en défilement sur ses deux faces. On entend ici par ligne d'essorage le segment le plus court reliant la buse et la tôle, correspondant au trajet minimum effectué par le gaz d'essorage.

Ce réglage du niveau d'oxydation pourra être effectué par tout moyen adapté, tel que, par exemple, un caisson de confinement couvrant la zone d'essorage et alimenté en gaz neutre comme de l'azote. Il sera également possible d'utiliser un gaz pauvre en oxygène en tant que gaz d'essorage et de ne pas alimenter particulièrement le caisson en gaz inerte, celui-ci étant alors uniquement alimenté par le flux de gaz d'essorage.

Pour déterminer le pouvoir oxydant de l'atmosphère entourant la bande, on procédera à l'évaluation de sa pression partielle d'oxygène équivalente à l'équilibre.

Lorsque le seul gaz oxydant présent est $O_2$, mélangé avec un gaz inerte (azote, argon), cette pression est alors égale à la teneur volumique en $O_2$ que l'on peut mesurer en temps réel au moyen d'un capteur adapté.

Lorsque d'autres gaz oxydants, tels que $H_2O$ ou $CO_2$ sont présents en mélange avec un gaz réducteur tel que $H_2$ ou CO, par exemple, la pression partielle d'oxygène équivalente se calcule par la loi d'action de masse à la température des gaz considérée.

Par exemple, pour le couple $H_2/H_2O$, la réaction s'écrit comme suit :

$$H_2 + 1/2\ O_2 \leftrightarrow H_2O$$

A l'équilibre thermodynamique, les pressions partielles des gaz obéissent à la relation suivante :

$$\frac{pH_2O}{pH_2 \times \sqrt{pO_2}} = e^{-\frac{\Delta G}{RT}}$$

avec R la constante des gaz parfaits, T la température des gaz en Kelvin, et $\Delta G$ la variation d'énergie libre associée à la réaction, que l'on trouve dans les tables de thermodynamique, en calories par mole ou en Joules par mole selon la valeur prise pour la constante R.

De cette relation, on extrait la valeur de $pO_2$, pression partielle d'oxygène équivalente à l'équilibre pour le mélange gazeux considéré.

Dans le cadre de l'invention, il faut que $pO_2$ soit compris entre 0,0015 et 0,04.

Par ailleurs, il peut être souhaitable de prolonger l'éventuel caisson de confinement jusqu'à la surface du bain ou jusqu'à une position intermédiaire entre le bain et la ligne d'essorage afin de limiter l'oxydation avant essorage. En effet, lorsque la surface de la tôle est exposée à l'air libre, une telle couche se forme systématiquement mais est la plupart du temps éliminée et renvoyée dans le bain de revêtement sous l'impact du jet d'essorage. Un tel confinement permet donc de réduire la quantité d'oxydes du bain qui peuvent être entraînés par la bande pendant son défilement et créer ainsi des défauts rédhibitoires.

Il présente cependant l'inconvénient de favoriser la vaporisation de zinc à partir du bain, vapeurs qui peuvent ensuite venir encrasser le caisson de confinement.

Bien que toutes sortes de buses d'essorage puissent être utilisées pour la mise en oeuvre du procédé selon l'invention, on préférera plus particulièrement choisir des buses dont l'orifice de sortie se présente sous forme de lame dont la largeur dépasse celle de bande à revêtir. Ce type de buse permet en effet de réaliser un bon confinement de la partie basse de la zone d'essorage.

## Essais

On réalise les essais à partir d'une tôle métallique en acier de type IF-Ti laminée à froid, que l'on fait passer dans un creuset contenant un bain métallique à base de zinc comprenant des proportions variables d'aluminium et de magnésium. Il est maintenu à une température de 70°C au-delà du liquidus de la composition.

A la sortie du bain, le revêtement obtenu est essoré à l'azote au moyen de deux buses classiques de façon à obtenir une épaisseur de revêtement de l'ordre de $7\mu$m.

Au dessus de ces buses d'essorage sont placés une série de caissons de refroidissement, de part et d'autre de la bande, caissons permettant de souffler de l'air pour solidifier le revêtement par convection forcée. En fonction du débit, de la température du gaz de soufflage et du nombre de caissons mis en service, on peut régler la vitesse de refroidissement entre 5 et 50 °C/s.

En jouant sur ces paramètres et sur la position des caissons mis en service, on réalise une série d'essais de manière à obtenir des refroidissements contrôlés à différentes vitesses de refroidissement, avant d'atteindre la température du liquidus et entre cette température et celle du solidus. Lorsque tous les caissons sont déconnectés, le revêtement n'est soumis qu'à une convection naturelle à une vitesse d'environ 5°C/s.

On a également procédé à un essai (référencé 17) en réalisant un essorage à l'azote en caisson confiné avec limitation de la teneur en oxygène à 4% en volume dans la zone commençant au niveau de la ligne d'essorage et finissant 10 cm plus haut.

Enfin, on emboutit les échantillons obtenus selon un mode de déformation équibiaxiale à 3,5% (Marciniak). Une partie des échantillons a été préalablement soumis à une opération de skin-pass avec un taux d'allongement de 1,5%.

Au fur et à mesure de l'avancement des essais, on mesure les valeurs d'ondulation $Wa_{0,8}$. Cette mesure consiste à acquérir par palpation mécanique, sans patin, un profil de la tôle d'une longueur de 50 mm, mesuré à 45° de la direction de laminage. On retranche au signal obtenu l'approximation de sa forme générale par un polynôme de degré au moins 5. L'ondulation Wa est alors isolée de la rugosité Ra par un filtre gaussien au seuil de coupure de 0,8mm.

Les résultats obtenus sont rassemblés dans le tableau suivant :

| Essai | Composition du revêtement (% en poids) | | | Liquidus-Solidus (°C) | VR avant le liquidus (°C/s) | VR entre liquidus et solidus (°C/s) | Ondulation Wa$_{0,8}$ ($\mu$m) | | | |
|---|---|---|---|---|---|---|---|---|---|---|
| | Zn | Al | Mg | | | | Sans skin-pass ni déformation | Sans skin-pass et après déformation | Avec skin-pass et avant déformation | Avec skin-pass et après déformation |
| 1 | 93 | 4 | 3 | 357 - 340 | 5 | 5 | 1,21 | 1,08 | 0,42 | 0.87 |
| 2 | 93 | 4 | 3 | 357 - 340 | 5 | 10 | 0,92 | ne | ne | ne |
| 3* | 93 | 4 | 3 | 357 - 340 | 5 | 15 | 0,43 | ne | ne | ne |
| 4* | 93 | 4 | 3 | 357 - 340 | 5 | 20 | 0,39 | 0,34 | 0,32 | 0,30 |
| 5* | 93 | 4 | 3 | 357 - 340 | 10 | 20 | 0,47 | ne | ne | ne |
| 6 | 93 | 4 | 3 | 357 - 340 | 15 | 20 | 3,01 | ne | ne | ne |
| 7 | 99,7 | 0.3 | 0 | 416-413 | 5 | 20 | 0,71 | 0,62 | 0,41 | 0,63 |
| 8 | 97 | 1,5 | 1,5 | 380 - 340 | 5 | 20 | 0,84 | ne | ne | ne |
| 9 | 86 | 11 | 3 | 428 - 340 | 5 | 20 | 0,68 | ne | ne | ne |
| 10* | 95,5 | 3 | 1,5 | 369 - 340 | 5 | 20 | 0,42 | 0,39 | 0,34 | 0,33 |
| 11* | 91 | 6 | 3 | 371 - 340 | 5 | 20 | 0,43 | 0,40 | 0,35 | 0,32 |
| 12* | 98 | 2 | 0 | 401 - 381 | 5 | 20 | 0,48 | 0,46 | 0,36 | 0,35 |
| 13* | 95 | 5 | 0 | 381 - 381 | 5 | 20 | 0,43 | 0,39 | 0,35 | 0,34 |
| 14 | 95 | 5 | 0 | 381 - 381 | 15 | 20 | 3,36 | ne | ne | ne |
| 15 | 95 | 5 | 0 | 381 - 381 | 5 | 5 | 1,37 | 1,14 | 0,43 | 0,93 |
| 16* | 92 | 8 | 0 | 410 - 381 | 5 | 20 | 0,47 | 0,44 | 0,37 | 0,34 |
| 17* | 93 | 4 | 3 | 357 - 340 | 5 | 20 | 0,36 | 0,33 | 0,30 | 0,28 |

ne : non évalué, * : selon l'invention, VR : vitesse de refroidissement

A partir des essais 1 à 3, on constate qu'à partir d'une vitesse de refroidissement lors de la solidification supérieure ou égale à 15°C/s, on obtient une ondulation spectaculairement réduite, à l'état non skin-passé.

Par ailleurs, les présents inventeurs ont constaté qu'un refroidissement trop rapide dans la première phase de refroidissement, avant d'atteindre le liquidus, était également néfaste pour l'aspect du revêtement, comme le montre les essais 4 à 6 où l'on observe que le dépassement du seuil de 15°C/s dégrade considérablement l'ondulation qui passe de 0,47 à 3,01 μm lorsque l'on passe d'un refroidissement de 10 à 15°C/s.

On constate donc que cette première étape de refroidissement est également importante pour l'obtention de l'aspect de surface recherché, ce qui amène à conclure que l'ensemble du processus de refroidissement doit être contrôlé.

A la lecture des essais 7 à 12, on constate également que l'effet de nivellement de l'ondulation n'est pas obtenu pour n'importe quel revêtement galvanisé, mais uniquement pour les revêtements dont la composition respecte les gammes définies par la présente invention.

En ce qui concerne les essais 4, 10 à 13 et 16 portant sur des tôles skin-passés et embouties, on constate une amélioration surprenante du niveau d'ondulation, alors que dans le même temps, les essais comparatifs 1, 7 et 15 montrent une dégradation des résultats obtenus après emboutissage, ne permettant pas de descendre en dessous du seuil de 0,35 μm d'ondulation pour une pièce fabriquée à partir d'une tôle skin-passée.

Enfin, en comparant les résultats de l'essai 17 avec ceux de l'essai 4, réalisés dans des conditions identiques mais sans précaution particulière au niveau de l'essorage, on constate une diminution du niveau d'ondulation dans tous les cas de figures.

## Revendications

1. Procédé de fabrication d'une bande métallique présentant un revêtement métallique de protection contre la corrosion, comprenant les étapes consistant à :

   - faire passer la bande métallique dans un bain de métal en fusion comprenant entre 2 et 8% en poids d'aluminium, de 0 à 5% en poids de magnésium et jusqu'à 0,3% en poids d'éléments d'addition, le complément étant du zinc et des impuretés inévitables, ledit bain étant maintenu à une température comprise entre 350 et 700°C puis
   - essorer la bande métallique revêtue au moyen de buses projetant un gaz de part et d'autre de la bande, puis
   - refroidir le revêtement de façon contrôlée jusqu'à sa solidification complète, ledit refroidissement étant effectué à une vitesse inférieure à 15°C/s entre la température en sortie d'essorage et le début de la solidification, puis à une vitesse supérieure ou égale à 15°C/s entre le début et la fin de sa solidification.

2. Procédé selon la revendication 1, pour lequel ledit refroidissement est effectué à une vitesse inférieure à 10°C/s entre la température en sortie d'essorage et le début de la solidification, puis à une vitesse supérieure ou égale à 15°C/s entre le début et la fin de sa solidification.

3. Procédé selon la revendication 2, pour lequel ledit refroidissement est effectué à une vitesse inférieure à 10°C/s entre la température en sortie d'essorage et le début de la solidification, puis à une vitesse supérieure ou égale à 20°C/s entre le début et la fin de sa solidification.

4. Procédé selon l'une quelconque des revendications 1 à 3, pour lequel on essore la bande métallique revêtue de telle sorte que la partie de la bande située entre la ligne d'essorage et finissant au moins 10 cm plus haut soit en contact avec une atmosphère dont le pouvoir oxydant est inférieur à celui d'une atmosphère constituée de 4% en volume d'oxygène et 96% en volume d'azote.

5. Procédé selon l'une quelconque des revendications 1 à 4, pour lequel la bande métallique est une bande d'acier.

6. Bande métallique laminée à froid et revêtue par trempé à chaud mais non skin-passée, pouvant être obtenue par le procédé selon l'une quelconque des revendications 1 à 5, dont le revêtement métallique comprend de 2 à 8% en poids d'aluminium, de 0 à 5% en poids de magnésium, jusqu'à 0,3% en poids d'éléments additionnels, le complément étant constitué de zinc et d'impuretés inévitables, ledit revêtement présentant une ondulation $Wa_{0,8}$ inférieure ou égale à 0,5 μm.

7. Bande métallique selon la revendication 6, dont le revêtement métallique ne contient pas de magnésium.

8. Bande métallique selon la revendication 6, dont le revêtement métallique contient de 1 à 4% en poids de magnésium.

9. Bande métallique selon l'une quelconque des revendications 6 à 8, constituée d'acier.

10. Pièce métallique obtenue par déformation d'une bande métallique selon l'une quelconque des revendications 6 à 9, dont le revêtement présente une ondulation $Wa_{0,8}$ inférieure ou égale à 0,48 $\mu$m.

11. Pièce métallique obtenue par déformation d'une bande métallique selon l'une quelconque des revendications 6 à 9, ayant en outre subi une opération de skin-pass avant déformation, dont le revêtements présente une ondulation $Wa_{0,8}$ inférieure ou égale à 0,35 $\mu$m.

**Claims**

1. Process for manufacturing a metal strip having a metallic corrosion protection coating, comprising the steps consisting in:

   - making the metal strip pass through a bath of molten metal comprising between 2 and 8 wt% aluminum, 0 to 5 wt% magnesium and up to 0.3 wt% addition elements, the balance being zinc and inevitable impurities, said bath being maintained at a temperature between 350 and 700°C; then
   - wiping the coated metal strip by means of nozzles spraying a gas on either side of the strip; and then
   - cooling the coating in a controlled manner until it has completely solidified, said cooling being carried out at a rate less than 15°C/s between the temperature on leaving the wiping unit and the start of solidification and then at a rate greater than or equal to 15°C/s between the start and end of its solidification.

2. Process according to Claim 1, for which said cooling is carried out at a rate of less than 10°C/s between the temperature on leaving the wiping unit and the start of solidification and then at a rate greater than or equal to 15°C/s between the start and the end of its solidification.

3. Process according to Claim 2, for which said cooling is carried out at a rate of less than 10°C/s between the temperature on leaving the wiping unit and the start of solidification, and then at a rate greater than or equal to 20°C/s between the start and end of its solidification.

4. Process according to any one of Claims 1 to 3, for which the coated metal strip is wiped in such a way that the portion of the strip located between the wiping line and finishing at least 10 cm higher is in contact with an atmosphere having an oxidizing power lower than that of an atmosphere consisting of 4 vol% oxygen and 96 vol% nitrogen.

5. Process according to any one of Claims 1 to 4, for which the metal strip is a steel strip.

6. Cold-rolled metal strip hot-dip coated but not skin-passed, which can be obtained by the process according to any one of Claims 1 to 5, the metallic coating of which comprises 2 to 8 wt% aluminum, 0 to 5 wt% magnesium and up to 0.3 wt% additional elements, the balance consisting of zinc and inevitable impurities, said coating having a waviness $Wa_{0.8}$ of 0.5 $\mu$m or less.

7. Metal strip according to Claim 6, the metallic coating of which does not contain magnesium.

8. Metal strip according to Claim 6, the metallic coating of which contains 1 to 4 wt% magnesium.

9. Metal strip according to any one of Claims 6 to 8, which is made of steel.

10. Metal part obtained by deformation of a metal strip according to any one of Claims 6 to 9, the coating of which has a waviness $Wa_{0.8}$ of 0.48 $\mu$m or less.

11. Metal part obtained by deformation of a metal strip according to any one of Claims 6 to 9, having furthermore undergone a skin-pass operation before deformation, the coating of which has a waviness $Wa_{0.8}$ of 0.35 $\mu$m or less.

**Patentansprüche**

1. Verfahren zum Herstellen eines Metallbandes, das eine Metallbeschichtung zum Schutz vor Korrosion aufweist, das die folgenden Schritte umfasst, die darin bestehen:

- das Metallband durch ein Bad aus geschmolzenem Metall zu bewegen, das 2 bis 8 Gew.-% Aluminium, 0 bis 5 Gew.-% Magnesium und bis zu 0,3 Gew.-% zusätzliche Elemente enthält, wobei der Rest Zink und unvermeidliche Verunreinigungen sind, wobei das Bad auf einer Temperatur im Bereich von 350 bis 700 °C gehalten wird, dann
- das beschichtete Metallband mittels Düsen, die ein Gas auf beide Seiten des Bandes ausstoßen, zu trocknen, dann
- die Beschichtung auf gesteuerte Weise bis zu ihrer vollständigen Verfestigung abzukühlen, wobei die Abkühlung zwischen der Temperatur am Ende des Trocknens und dem Beginn der Verfestigung mit einer Geschwindigkeit kleiner als 15 °C/s und dann zwischen dem Beginn und dem Ende seiner Verfestigung mit einer Geschwindigkeit größer oder gleich 15 °C/s erfolgt.

2. Verfahren nach Anspruch 1, wobei die Abkühlung zwischen der Temperatur am Ende des Trocknens und dem Beginn der Verfestigung mit einer Geschwindigkeit kleiner als 10 °C/s und dann zwischen dem Beginn und dem Ende seiner Verfestigung mit einer Geschwindigkeit größer oder gleich 15 °C/s erfolgt.

3. Verfahren nach Anspruch 2, wobei die Abkühlung zwischen der Temperatur am Ende des Trocknens und dem Beginn der Verfestigung mit einer Geschwindigkeit kleiner als 10 °C/s und dann zwischen dem Beginn und dem Ende seiner Verfestigung mit einer Geschwindigkeit größer oder gleich 20 °C/s erfolgt.

4. Verfahren nach einem der Ansprüche 1 bis 3, wobei das beschichtete Metallband in der Weise getrocknet wird, dass der Teil des Bandes, der sich zwischen der Trocknungslinie und einem Ende, das wenigstens 10 cm höher ist, befindet, mit einer Atmosphäre in Kontakt ist, deren Oxidationskraft kleiner ist als jene einer Atmosphäre, die aus 4 Vol.-% Sauerstoff und 96 Vol.-% Stickstoff gebildet ist.

5. Verfahren nach einem der Ansprüche 1 bis 4, wobei das Metallband ein Stahlband ist.

6. Metallband, das kaltgewalzt und durch Heißtauchen beschichtet, jedoch nicht dressiergewalzt ist, das durch das Verfahren nach einem der Ansprüche 1 bis 5 erhalten werden kann, dessen Metallbeschichtung 2 bis 8 Gew.-% Aluminium, 0 bis 5 Gew.-% Magnesium und bis zu 0,3 Gew.-% zusätzliche Elemente enthält, wobei der Rest aus Zink und unvermeidbaren Verunreinigungen gebildet ist, wobei die Beschichtung eine Welligkeit $Wa_{0,8}$, die kleiner oder gleich 0,5 $\mu$m ist, aufweist.

7. Metallband nach Anspruch 6, dessen Metallbeschichtung kein Magnesium enthält.

8. Metallband nach Anspruch 6, dessen Metallbeschichtung 1 bis 4 Gew.-% Magnesium enthält.

9. Metallband nach einem der Ansprüche 6 bis 8, das aus Stahl gebildet ist.

10. Metallteil, das durch Verformen eines Metallbandes nach einem der Ansprüche 6 bis 9 erhalten wird, dessen Beschichtung eine Welligkeit $Wa_{0,8}$ kleiner oder gleich 0,48 $\mu$m aufweist.

11. Metallteil, das durch Verformen eines Metallbandes nach einem der Ansprüche 6 bis 9 erhalten wird und außerdem vor dem Verformen einem Dressierwalzvorgang unterworfen worden ist, dessen Beschichtung eine Welligkeit $Wa_{0,8}$ kleiner oder gleich 0,35 $\mu$m aufweist.

**EP 2 297 372 B1**

**RÉFÉRENCES CITÉES DANS LA DESCRIPTION**

**Documents brevets cités dans la description**

- EP 1466994 A